# DEMANDE DE BREVET EUROPEEN

(11) **EP 2 447 581 A1**
(43) Date de publication de la demande: **02.05.2012**
(21) Numéro de dépôt: 11306309.3
(22) Date de dépôt: 10.10.2011
(51) Int. Cl.: F16K 27/12, F02M 25/07

(54) **Dispositif de protection pour un volet de recirculation des gaz d'echappement**

(30) Priorité: 29.10.2010 FR 1058959
(71) Demandeur: Renault s.a.s., 92100 Boulogne-Billancourt (FR)
(72) Inventeur: Pinsard, Romain, 78180 Montigny le Bretonneux (FR); Lapouge, Jocelyn, 78280 Guyancourt (FR)

(57) **Abrégé**

Le dispositif de protection (10) selon l'invention, apte à passer d'une première position ouverte à une seconde position fermée, dans laquelle il se positionne sensiblement autour d'un volet EGR (11), est conformé de sorte à former une cage de protection, positionnée autour du volet EGR (11) et destinée à protéger le volet EGR (11). Le dispositif de protection (10) comporte au moins deux coques (15, 16) de protection, articulées (17) l'une par rapport à l'autre à leurs premières extrémités et équipées de moyens de fermeture (18, 19) à leurs secondes extrémités, des premiers moyens de positionnement (20) du dispositif de protection (10) sur une portion en saillie du volet EGR (11), et des seconds moyens de positionnement (22, 23) du dispositif de protection (10) au niveau de tuyaux d'entrée (12) et de sortie (13) du volet EGR (11).

## Description

### Domaine technique de l'invention

L'invention concerne un dispositif de protection d'un élément, apte à passer d'une première position ouverte à une seconde position fermée, dans laquelle le dispositif de protection se positionne sensiblement autour l'élément à protéger.

L'invention concerne plus particulièrement un dispositif de protection pour un volet de recirculation de gaz d'échappement (ou volet EGR, « Exhaust Gas Recirculation » en anglais), apte à protéger le volet EGR lors de différents manipulations de la ligne d'échappement, sur laquelle est monté le volet EGR, plus particulièrement au moment de la fabrication et du montage en usine d'un véhicule automobile.

### Etat de la technique

Un volet de recirculation des gaz d'échappement (« Exhaust Gas Recirculation » en anglais), ou volet EGR, est une pièce intégrée sur une ligne d'échappement dont l'utilisation innovante et de plus en plus répandue, plus particulièrement pour des lignes d'échappement destinées à être montées dans des véhicules automobiles, pour lesquels les meilleures performances écologiques sont recherchées.

Un tel volet EGR est une pièce très fragile, qui se compose notamment d'éléments tels que des roues dentées en plastique, des circuits imprimés, un petit actionneur électrique, un ressort de rappel, une connectique électronique, etc. De son mauvais fonctionnement découlerait un dysfonctionnement du véhicule automobile, car le volet EGR a un rôle primordiale dans la stratégie de dépollution du véhicule et donc du CO₂ produit en sortie d'échappement, et cela pourrait entraîner la non-homologation du véhicule.

Le volet EGR est classiquement assemblé sur la ligne d'échappement en usine de fabrication et montage, il est donc impératif de la protéger des chocs et des différentes projections, par exemple d'eau, de soudures, et plus généralement de tout ce qui pourrait nuire à son fonctionnement.

Cependant, bien qu'il existe de nombreux dispositifs de protection connus, du type passant d'une position d'ouverture, ou position de repos, à une position de fermeture, dans laquelle le dispositif se positionne sensiblement autour d'un élément à protéger, il n'existe actuellement aucun dispositif de protection de ce type spécialement adapté à un volet EGR.

### Objet de l'invention

L'invention a pour but de remédier à l'ensemble des inconvénients précités et a pour objet la réalisation d'un dispositif de protection caractérisé, plus particulièrement, par le fait que, ledit élément à protéger étant un volet EGR muni de tuyaux d'entrée et de sortie et destiné à être monté sur une ligne d'échappement d'un véhicule automobile, le dispositif de protection est conformé de sorte à former une cage de protection, positionnée autour du volet EGR et destinée à protéger le volet EGR, lors de manipulations de la ligne d'échappement.

Un tel dispositif de protection, agencé en cage de protection autour du volet EGR, permet ainsi d'assurer une protection optimale du volet EGR, lors des différentes manipulations de la ligne d'échappement associée.

D'autres avantages et caractéristiques de l'invention peuvent être considérées isolément ou en combinaison.

Le dispositif de protection peut comporter au moins :
- deux coques de protection, articulées l'une par rapport à l'autre à leurs premières extrémités et équipées de moyens de fermeture à leurs secondes extrémités,
- des premiers moyens de positionnement du dispositif de protection sur une portion en saillie du volet EGR,
- et des seconds moyens de positionnement du dispositif de protection au niveau des tuyaux d'entrée et de sortie du volet EGR.

De tels moyens de positionnement associés au dispositif de protection permettent notamment une rapidité et une sécurité du positionnement, de sorte à éviter toute chute ou mauvais positionnement du dispositif de protection lors de son installation.

Lesdites coques peuvent être conformées à leurs premières extrémités de sorte à former une charnière d'articulation ou peuvent être venues de matière d'une seule pièce, un rétrécissement de matières liant les deux coques à leurs premières extrémités formant une charnière d'articulation.

Une telle articulation du dispositif de protection permet ainsi une manipulation aisée et une installation simplifiée du dispositif de protection autour du volet EGR.

Lesdits premiers moyens de positionnement peuvent comporter un embouti, formé dans au moins une des coques et destiné à coopérer avec ladite portion en saillie du volet EGR.

Un tel embouti forme ainsi une empreinte faisant office de moyen de positionnement et de moyen de détrompage, assurant ainsi un effet d'anti rotation du dispositif de protection installé autour du volet EGR et un moyen de repérage pour installer le dispositif correctement dès le départ.

Dans une première variante de réalisation, lesdits seconds moyens de positionnement peuvent comporter :
- des ailettes latérales, agencées sur les parois d'une des coques et aptes à venir parallèlement en contact serré sur les tuyaux d'entrée et de sortie du volet EGR, en position fermée du dispositif de protection,
- des surépaisseurs, agencées au niveau des bords de l'autre des coques et aptes à venir en contact sur les tuyaux d'entrée et de sortie du volet EGR en regard des ailettes latérales de l'autre coque, en position fermée du dispositif de protection.

Dans une seconde variante de réalisation, lesdits seconds moyens de positionnement peuvent comporter des ailettes latérales, agencées sur les parois des deux coques et aptes à venir parallèlement en contact serré autour des tuyaux d'entrée et de sortie du volet EGR en regard les unes des autres, en position fermée du dispositif de protection.

De tels moyens de positionnement, épousant ainsi parfaitement la forme et le diamètre des tuyaux d'entrée et de sortie du volet EGR, permettent notamment un centrage optimal et un serrage optimal du dispositif de protection autour du volet EGR.

Dans la première variante de réalisation, une des coques peut comporter des rainures de positionnement, aptes à recevoir une partie des parois latérales de l'autre coque, de sorte à laisser un jeu prédéterminé entre la majeure partie du volet EGR et le dispositif de protection.

Un tel agencement permet ainsi, d'une part, d'optimiser le positionnement entre les deux coques et, d'autre part, de maintenir une lame d'air entre le dispositif de protection et le volet EGR, évitant ainsi tout échauffement et empêchant surtout tout contact entre les deux pièces.

Dans la seconde variante de réalisation, une des coques du dispositif de protection peut comporter une paroi de base sensiblement plane, conformée de sorte à délimiter au moins deux rainures d'évacuation de liquide, éventuellement présent à l'intérieur du dispositif de protection dans sa position fermée.

Dans la seconde variante de réalisation, en position fermée du dispositif de protection, les parois des coques peuvent être aptes à venir en contact les unes contre les autres, au-dessus des dites rainures d'évacuation de liquide, de sorte à laisser un jeu prédéterminé entre la majeure partie du volet EGR et le dispositif de protection.

Une telle coque du dispositif de protection laissant libres les extrémités des rainures d'évacuations formées dans l'autre coque permet ainsi l'évacuation de liquide, notamment de l'eau, qui peut être présent lors de la manipulation de la ligne d'échappement, tout en garantissant une vraie protection pour le volet EGR avec les coques en contact l'une contre l'autre.

Dans la seconde variante de réalisation, ladite paroi de base peut présenter une longueur prédéterminée de sorte à permettre un positionnement stable du dispositif de protection sur des moyens de manutention, lors de manipulations de la ligne d'échappement.

Une telle conformation de la paroi de base d'une des coques permet ainsi un positionnement stable du dispositif de protection sur, par exemple, des convoyeurs à rouleaux, utilisés pour la manutention des lignes d'échappement. Une telle conformation permet également une orientation optimale de la ligne d'échappement sur ces moyens de manutention, ainsi qu'un glissement optimal du dispositif de protection, notamment dans le cas de moyens de manutention du type convoyeurs à rouleaux.

Dans la seconde variante de réalisation, au moins une des coques peut comporter des conformations locales, aptes à permettre l'empilement de plusieurs dispositifs de protection les uns sur les autres.

Un tel empilage des coques de plusieurs dispositifs de protection les uns sur les autres offre ainsi des gains en termes de zones de stockage nécessaires et en termes de coûts d'emballage, dans le cas du transport et de la fabrication de plusieurs dispositifs de protection selon l'invention.

Selon l'invention, au moins une des coques du dispositif de protection peut comporter au moins une découpe, réalisée dans toute l'épaisseur de ladite coque.

Une telle découpe permet notamment de favoriser l'accès à des parties utiles du volet EGR, par des outils, un opérateur, etc.

Selon l'invention, le dispositif de protection peut comporter un capuchon de protection, apte à coopérer avec une connectique du volet EGR, faisant saillie à travers le dispositif de protection en position fermée autour du volet EGR.

Un tel capuchon permet notamment d'assurer la protection et l'étanchéité du dispositif de protection, dans le cas particulier où une connectique du volet EGR fait saillie à travers le dispositif de protection.

Ledit capuchon peut être lié au dispositif de protection par des moyens d'attache, du type sangle anti-perte.

De tels moyens d'attache permettent notamment d'éviter toute perte du capuchon pendant ou avant la manipulation et l'installation du dispositif de protection autour du volet EGR.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente une vue schématique en coupe d'un volet EGR, monté sur une portion d'une ligne d'échappement destinée à être montée sur un véhicule automobile.
La figure 2 représente une vue en perspective d'un premier mode de réalisation d'un dispositif de protection selon l'invention, en position ouverte, avant installation autour du volet EGR selon la figure 1.
La figure 3 représente une vue en perspective du dispositif de protection selon la figure 2, en position de fermeture agencé autour du volet EGR selon la figure 1.
La figure 4 est une vue de côté en coupe du dispositif de protection selon la figure 3.
La figure 5 est une vue agrandie d'un détail du dispositif de protection selon les figures 3 et 4, illustrant le positionnement du dispositif de protection au niveau des tuyaux du volet EGR.
La figure 6 est une vue agrandie d'un autre détail du dispositif de protection selon les figures 3 et 4, illustrant la protection d'une connectique du volet EGR.
Les figures 7a et 7b sont des vues agrandies d'un autre détail du dispositif de protection selon les figures 3 et 4, illustrant un moyen d'accès au volet EGR à travers le dispositif de protection selon les figures 3 et 4.
La figure 8 représente une vue en perspective d'une variante de réalisation d'un dispositif de protection selon l'invention, en position ouverte, avant installation autour du volet EGR selon la figure 1.
La figure 9 représente une vue en perspective de plusieurs dispositifs de protection selon la figure 8, empilés les uns sur les autres.
La figure 10 représente une vue en perspective de la variante de réalisation du dispositif de protection selon la figure 8, en position de fermeture agencé autour du volet EGR selon la figure 1.
La figure 11 est une vue de côté en coupe du dispositif de protection selon la figure 10.
La figure 12 est une vue agrandie d'un détail de la variante de réalisation du dispositif de protection selon la figure 8, illustrant des rainures d'évacuation d'eau conformées dans une de ses coques.
La figure 13 représente une vue en perspective de la variante de réalisation du dispositif de protection selon la figure 8, installé sur une ligne d'échappement.

### Description de modes particuliers de réalisation

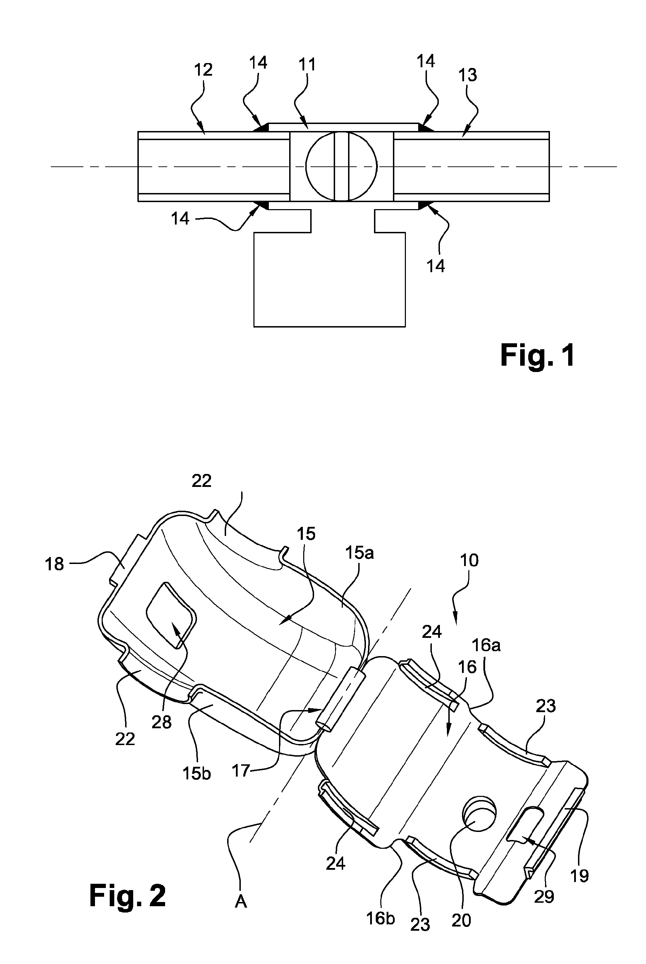

En référence aux figures 1 à 13, le dispositif de protection 10 selon l'invention est plus particulièrement destiné à protéger un volet EGR 11 d'une ligne d'échappement (non représentée), destinée à être montée sur un véhicule automobile. Comme représenté sur la figure 1, le volet EGR 11 est classiquement munie d'un tuyau d'entrée 12 et d'un tuyau de sortie 13, de préférence soudés au niveau de l'entrée et de la sortie du volet EGR 11, constituant une partie de la ligne d'échappement d'un véhicule automobile. Par exemple, les tuyaux d'entrée 12 et de sortie 13 sont assemblés sur le volet EGR 11 par des soudures circulaires 14.

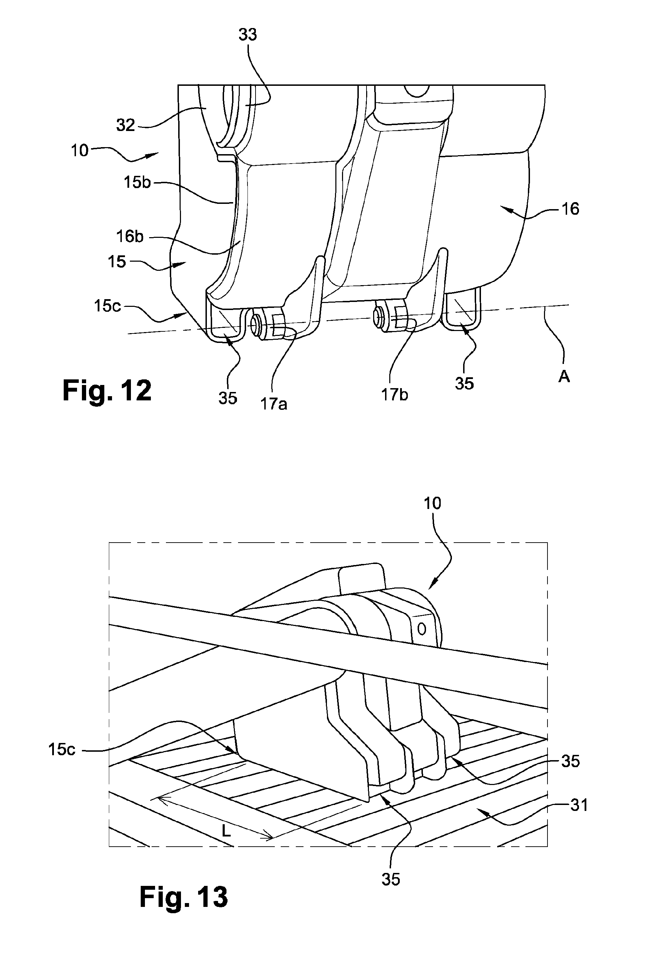

Selon l'invention, le dispositif de protection 10 est plus particulièrement destiné à être positionné autour du volet EGR 11, afin de le protéger lors de toutes les manipulations et manutentions de la ligne d'échappement nécessaires à l'installation et au transport de la ligne d'échappement en usine de fabrication et de montage d'un véhicule automobile, par exemple sur des convoyeurs à rouleaux 31, comme représenté sur la figure 13. De même, un tel dispositif de protection 10 selon l'invention permet d'empêcher les contacts entre le volet EGR 11 et d'autres pièces pouvant le choquer, lors du transport des lignes d'échappement, par exemple entre l'atelier échappement et celui de montage.

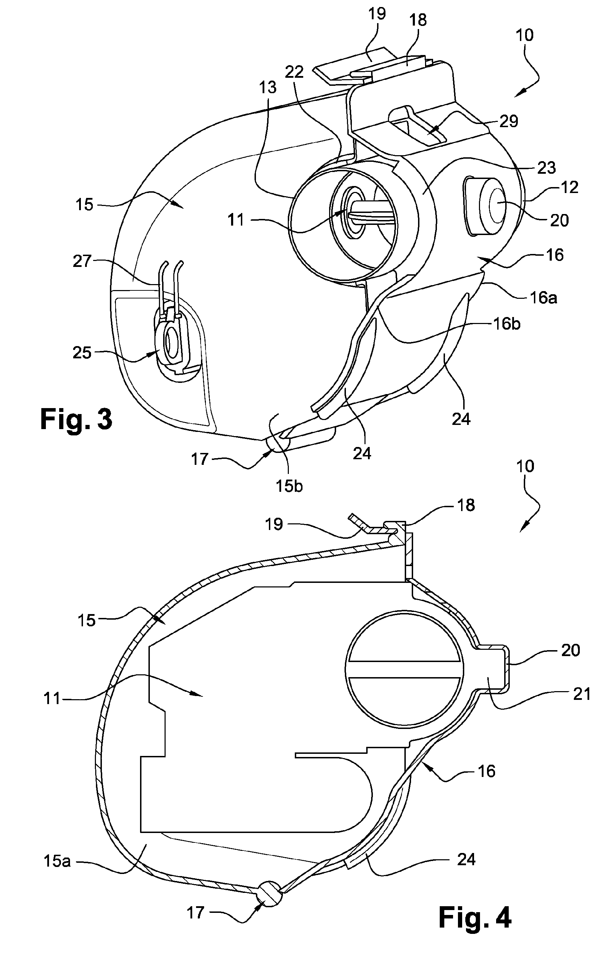

Dans le premier mode particulier de réalisation représenté sur les figures 2 à 7b, le dispositif de protection 10 selon l'invention comporte deux coques 15, 16, ou demi-coquilles, articulées l'une par rapport à l'autre de sorte à passer d'une position ouverte, ou position de repos, comme représenté sur la figure 2, à une position fermée, ou position d'utilisation, dans laquelle le dispositif de protection 10 entoure sensiblement le volet EGR 11, comme représenté sur les figures 3 et 4. Dans cette position fermée, le dispositif de protection 10 fait ainsi office de cage de protection pour le volet EGR 11.

Sur la figure 2, les deux coques 15, 16 sont reliées à leurs premières extrémités respectives et montées à pivotement l'une par rapport à l'autre autour d'un axe d'articulation A. Dans l'exemple représenté sur la figure 2, les extrémités des coques 15, 16 sont conformées de sorte à former une charnière d'articulation 17, selon l'axe d'articulation A. Les extrémités opposées à la charnière d'articulation 17 des deux coques 15, 16 sont munies de moyens de fermeture, de préférence du type moyens de clipsage. A titre d'exemple, comme représenté sur les figures 2 à 4, la première coque 15 comporte une languette 18 venant s'insérer dans un orifice correspondant d'une patte 19 de clipsage de la deuxième coque 16 (figures 3 et 4).

Sur les figures 2 à 4, le dispositif de protection 10 selon l'invention comporte également un embouti 20, ou empreinte, réalisé dans l'épaisseur de la deuxième coque 16 et destiné à coopérer avec une portion en saillie 21 du volet EGR 11 (figure 4). Un tel embouti 20 est destiné plus particulièrement à positionner le dispositif de protection 10 au niveau du volet EGR 11 de façon simple et précise et permet également de jouer le rôle de moyen de détrompage, l'opérateur positionnant tout de suite la bonne coque, à savoir la coque 16 selon les figures 2 à 4, du bon côté du volet EGR 11.

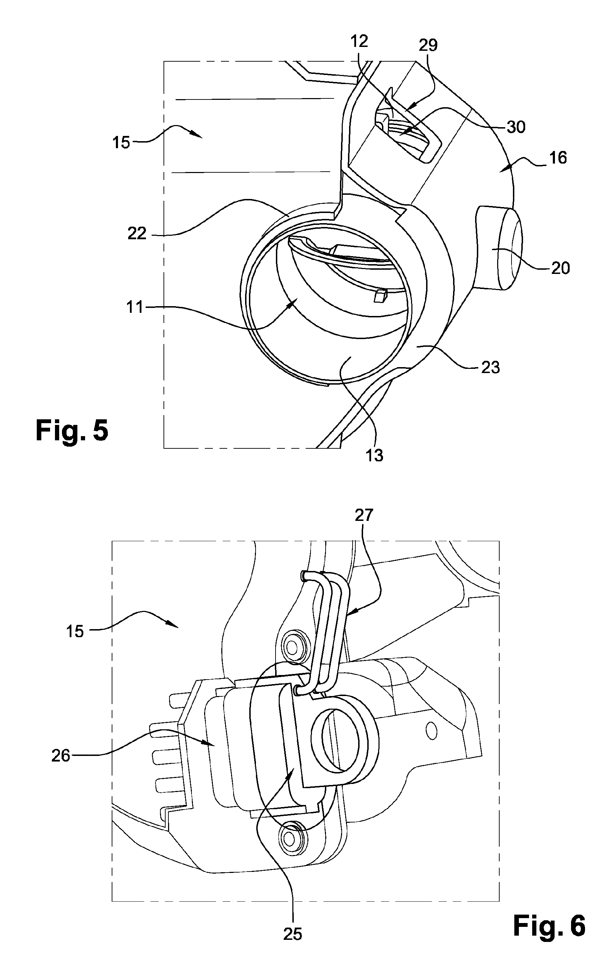

De même, le dispositif de protection 10 selon l'invention comporte également des moyens de positionnement destinés à coopérer avec les tuyaux d'entrée 12 et de sortie 13 du volet EGR 11. Comme représenté plus particulièrement sur les figures 2, 3 et 5, la coque 15 comporte, au niveau de ses deux parois latérales 15a, 15b, deux ailettes latérales 22, sensiblement de forme circulaire, de sorte à former sensiblement des oreilles latérales dont les dimensions sont aptes à coopérer avec les tuyaux d'entrée 12 et de sortie 13, en épousant parfaitement leurs courbures (figures 3 et 5). Comme représenté plus particulièrement sur la figure 5, les ailettes latérales 22 s'étendent parallèlement aux tuyaux d'entrée 12 et de sortie 13 et viennent en contact serré contre les tuyaux 12 et 13 du volet EGR 11, en épousant leurs formes sur sensiblement la moitié de leurs circonférences.

De même, comme représenté plus particulièrement sur les figures 2, 3 et 5, la coque 16 comporte, au niveau de ses parois latérales 16a, 16b, des surépaisseurs 23, agencées par exemple dans le prolongement des bords latéraux 16a, 16b, ou parois latérales, de la coque 16 et dont les courbures sont aptes à venir en contact serré contre les tuyaux d'entrée 12 et de sortie 13 du volet EGR 11. Comme représenté plus particulièrement sur la figure 5, de telles surépaisseurs 23 viennent en contact serré contre les tuyaux d'entrée 12 et de sortie 13, en épousant leurs formes sur sensiblement la moitié de leurs circonférences, en regard et à l'opposé des ailettes latérales 22 de la coque 15.

De tels moyens de positionnement, à savoir l'embouti 20, les ailettes latérales 22 et les surépaisseurs 23, permettent notamment un centrage et un serrage optimaux du dispositif de protection 10 autour du volet EGR 11.

Par ailleurs, comme représenté plus en détails sur les figures 2 à 4, la coque 16 munie de l'embouti 20 comporte également et avantageusement des rainures 24, formées sensiblement au niveau des bords 16a, 16b de la coque 16 et, de préférence, sensiblement dans le prolongement des surépaisseurs 23 (figure 2). De telles rainures 24 sont destinées à recevoir une partie des parois latérales 15a, 15b de la coque 15, dans la position fermée du dispositif de protection 10 (figures 3 et 4). Un tel agencement des parois 15a, 15b, 16a, 16b des deux coques 15, 16 les unes dans les autres permet notamment de garantir un positionnement optimal du dispositif de protection 10 autour du volet EGR, ainsi que de garantir une fermeture sécurisée.

D'autre part, l'agencement des deux coques 15, 16 du dispositif de protection 10, et plus particulièrement l'agencement entre les parois 15a, 15b et les bords 16a, 16b des coques 15, 16 et les moyens de positionnement, à savoir l'embouti 20, les ailettes latérales 22 et les surépaisseurs 23, sont tels qu'il reste un jeu prédéterminé, ou une lame d'air, entre le dispositif de protection 10 et la majeure partie du volet EGR 11. Plus particulièrement, comme représenté sur la figure 4, le jeu entre les parois du dispositif de protection 10 et le volet EGR 11 est situé à l'opposé des moyens de positionnement sur les tuyaux d'entrée 12 et de sortie 13 du volet EGR 11 et permet notamment d'assurer une lame d'air entre le dispositif de protection 10 et le volet EGR 11, évitant ainsi tout échauffement et empêchant aussi tout contact entre les deux pièces en cas de chocs, lors d'éventuelles manipulations.

Par ailleurs, comme représenté plus particulièrement sur les figures 3 et 6, le dispositif de protection 10 peut comporter avantageusement un capuchon 25, destiné à coopérer avec une connectique 26 correspondante du volet EGR 11, dans un mode particulier de réalisation du dispositif de protection dans lequel une connectique 26 du volet EGR 11 fait saillie à l'extérieur et à travers le dispositif de protection 10. Dans ce cas, le capuchon 25 est relié au dispositif de protection 10 par l'intermédiaire, par exemple, d'une sangle anti-perte 27, comportant une première extrémité liée, de préférence, à la coque 15 et une deuxième extrémité liée au capuchon 25.

Un tel capuchon 25 permet notamment d'assurer la protection et l'étanchéité du dispositif de protection 10 et une telle sangle 27 permet notamment d'éviter toute perte du capuchon 25 pendant ou avant la manipulation et/ou l'installation du dispositif de protection 10 autour du volet EGR 11.

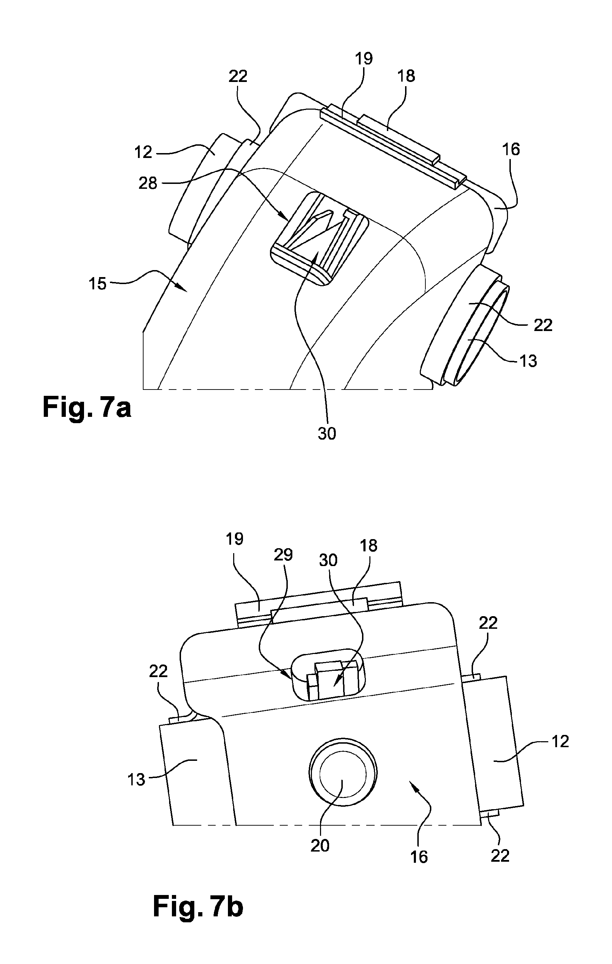

Par ailleurs, comme représenté plus particulièrement sur les figures 7a et 7b, le dispositif de protection 10 peut comporter avantageusement des découpes 28, 29, réalisées dans les coques 15, 16, de sorte à permettre un accès à des parties utiles du volet EGR 11. Sur la figure 7a, la coque 15 comporte, de préférence, une découpe 28 (figure 1), par exemple de forme sensiblement rectangulaire et positionnée sensiblement au-dessus du volet EGR 11. Sur la figure 7b, la coque 16 comporte, de préférence, une découpe 29 (figure 1), par exemple de forme sensiblement rectangulaire, telle que la découpe 29 se retrouve sensiblement en regard de la découpe 28 de la coque 15, dans la position fermée du dispositif de protection 10 (figures 7a, 7b).

Ainsi, un opérateur peut accéder facilement au volet EGR 11, plus particulièrement à une partie utile 30 du volet EGR 11, en passant à travers les découpes 28, 29 du dispositif de protection 10, et ce sans avoir à ouvrir le dispositif de protection 10. Par partie utile 30 du volet EGR 11, il faut comprendre les parties du volet EGR 11 pouvant nécessiter l'intervention d'un opérateur avec ses outils ou les parties pouvant servir de référentiel pour un assemblage ultérieur, etc.

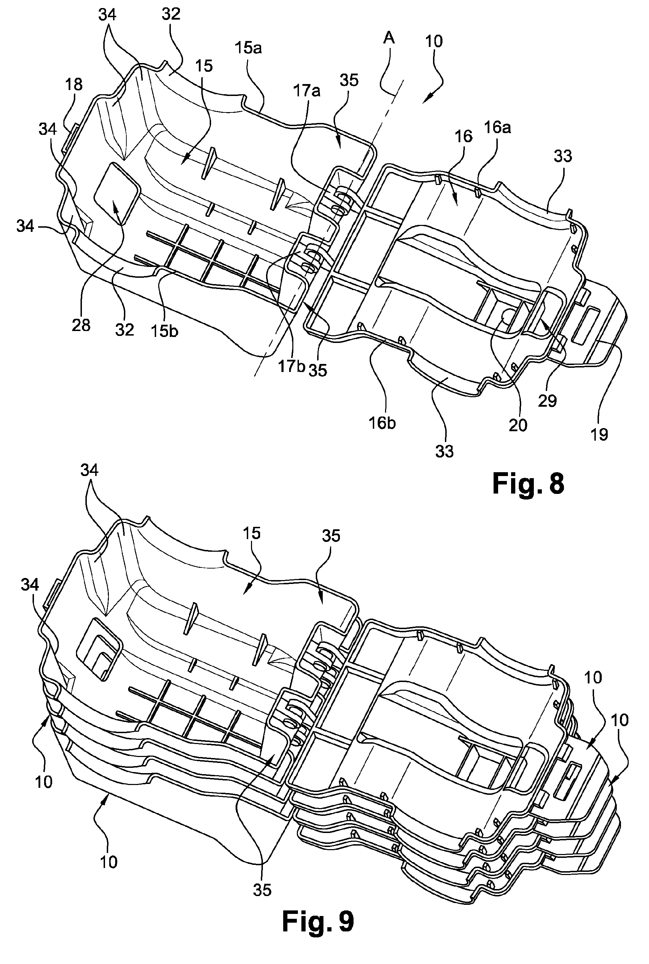

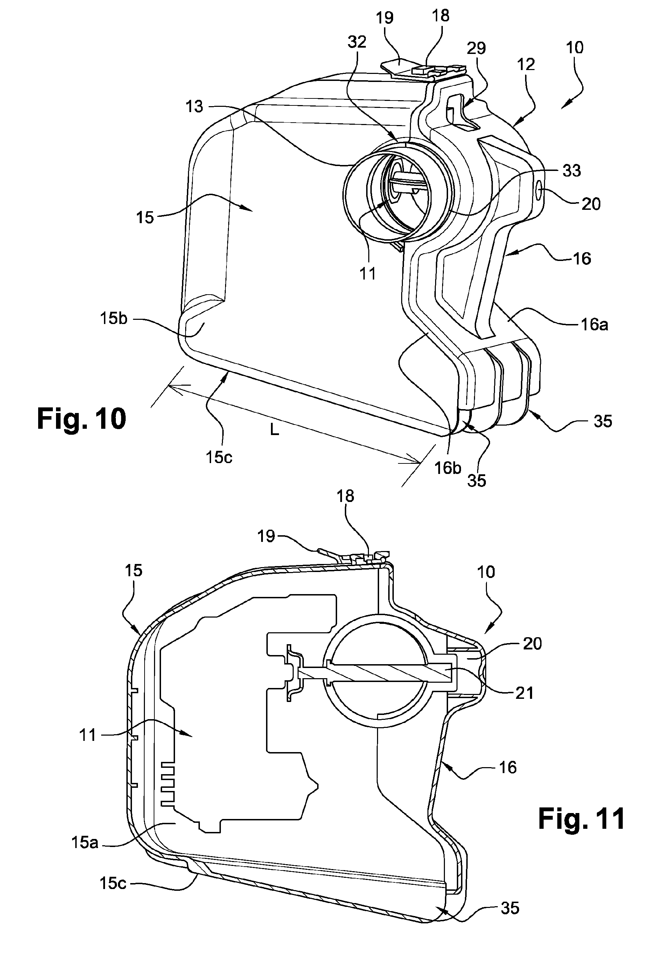

Dans la variante de réalisation représentée sur les figures 8 à 13, le dispositif de protection 10 selon l'invention comportent toujours les deux coques 15, 16 articulées autour de l'axe d'articulation A par l'intermédiaire de la charnière d'articulation 17, composée ici, par exemple, de deux éléments distincts 17a, 17b, au niveau desquels sont articulées les deux coques 15, 16 (figure 12). De même, les deux coques 15, 16 du dispositif de protection 10 comportent toujours les découpes 28, 29, pour l'accès au volet EGR 11, en position fermée, et les moyens de clipsage 18, 19 pour la fermeture du dispositif de protection 10 (figures 8, 10 et 11). La coque 16 comporte également l'embouti 20 destiné à coopérer avec la partie en saillie 21 correspondante du volet EGR 11 et faisant office de moyen de positionnement et de détrompage du dispositif de protection autour du volet EGR 11 (figures 8 et 11).

Ainsi, dans la variante de réalisation représentée sur les figures 8 à 13, le dispositif de protection 10 se distingue de celui représenté sur les figures 2 à 7b principalement par la conformation et les dimensions des deux coques 15 et 16 faisant office de cage de protection pour le volet EGR 11.

Plus particulièrement, sur les figures 8 et 9, la première coque 15 comporte des conformations 34 au niveau de plusieurs arêtes de ses parois latérales 15a, 15b, formant sensiblement des arêtes arrondies, destinées spécifiquement à l'empilage de plusieurs dispositifs de protection 10 les uns sur les autres, selon la variante de réalisation représentée sur les figures 8 à 13 (figures 8 et 9). Comme représenté plus particulièrement sur la figure 9, quatre dispositifs de protection 10 sont représentés empilés les uns sur les autres, en position ouverte, la première coque 15 de chaque dispositif de protection 10 étant apte à recevoir une première coque 15 d'un autre dispositif de protection 10 placé au-dessus et à se positionner en partie à l'intérieur d'une première coque 15 d'un autre dispositif de protection 10 placé en dessous. A titre d'exemple, les coques 15 des dispositifs de protection 10 empilés se callent les unes sur les autres par l'intermédiaire des conformations 34 de leurs bords.

Une telle version empilable, dans sa position ouverte, du dispositif de protection 10, comme représenté sur les figures 8 à 13, permet ainsi des gains importants en termes de coûts de stockage et de transport, les zones et les moyens de stockage et d'emballage nécessaires étant diminués.

Sur les figures 8 à 11, la première coque 15 comporte des ailettes latérales 32, sensiblement identiques aux ailettes latérales 22 du dispositif de protection représenté sur les figures 2 à 7b, agencées au niveau de ses parois latérales 15a, 15b et aptes à venir en contact serré contre les tuyaux d'entrée 12 et de sortie 13 du volet EGR 11. Par contre, la coque 16 comporte des secondes ailettes latérales 33, agencées au niveau de ses parois latérales 16a, 16b et destinées à coopérer avec les premières ailettes 32 de la coque 15, en venant se positionner également autour des tuyaux d'entrée 12 et de sortie 13 du volet EGR 11, en position fermée du dispositif de protection 10 (figure 10). Comme précédemment, les ailettes latérales 32, 33 jouent ainsi le rôle de moyens de positionnement aptes à venir en contact serré autour des tuyaux d'entrée 12 et de sortie 13 du volet EGR 11, dans la position fermée du dispositif de protection 10, comme représentée sur la figure 10.

Par ailleurs, dans la variante de réalisation représentée sur les figures 8 à 13, la coque 15 du dispositif de protection 10 comporte avantageusement une paroi de base 15c sensiblement plane (figures 10, 11 et 13), conformée de sorte à délimiter deux rainures 35, destinées plus particulièrement à l'évacuation de liquide, par exemple de l'eau, éventuellement présent dans le dispositif de protection 10 lors de manipulations de la ligne d'échappement. Comme représenté plus particulièrement sur les figures 8 et 12, les rainures 35 d'évacuation d'eau ont une section sensiblement en U et forment sensiblement des pieds de support conformés dans la paroi de base 15c, pour le dispositif de protection 10.

Par ailleurs, comme représenté plus particulièrement sur les figures 8 à 12, les coques 15 et 16 sont conformées de sorte que, dans la position fermée du dispositif de protection 10 autour du volet EGR 11, la paroi 15a de la coque 15 et la paroi 16a, ou bord, de la coque 16, ainsi que la paroi 15b de la coque 15 et la paroi 16b, ou bord, de la coque 16, sont en contact les unes contre les autres (figures 10, 11 et 12). De même, la coque 16 est agencée par rapport à l'axe d'articulation A de sorte que, en position fermée du dispositif de protection 16, elles viennent en contact avec la coque 15 au-dessus des rainures 35 d'évacuation de liquide conformées dans la paroi de base 15c de la coque 15 (figure 12), laissant ainsi libres les entrées des rainures 35, pour qu'elles puissent remplir leur fonction d'évacuation de liquide le cas échéant. Un tel agencement et une telle conformation des coques 15, 16 permet ainsi, comme précédemment, d'assurer un jeu fonctionnel, jouant le rôle de lame d'air, entre le dispositif de protection 10 et le volet EGR 11, évitant ainsi tout échauffement et empêchant aussi tout contact entre les deux pièces en cas de chocs, lors d'éventuelles manipulations (figure 11).

De plus, comme représenté plus particulièrement sur les figures 10 et 13, la longueur L de la paroi de base 15c de la coque 15 est prédéterminée et calculée, de sorte à assurer une stabilité optimale du dispositif de protection 10 autour du volet EGR 11. Notamment, la longueur L de la paroi de base 15c permet de maintenir une position du dispositif de protection 10, telle que représentée sur la figure 13, avec la paroi de base 15c placée sur le convoyeur à rouleaux 31. La ligne d'échappement muni du volet EGR 11 entouré par le dispositif de protection 10 selon l'invention est ainsi stable lors du glissement du dispositif de protection 10 sur les rouleaux du convoyeur 31, pendant la manutention et la manipulation de la ligne d'échappement en usine. Une telle surface plane permet ainsi un glissement efficace du dispositif de protection 10, évitant ainsi tout risque de chute ou de détérioration. Une telle longueur L et une telle conformation du dispositif de protection 10 permettent également une bonne orientation de la ligne d'échappement, notamment lors de déplacements sur le convoyeur à rouleaux 31 (figure 13).

A titre d'exemple, la longueur L de la paroi de base 15c est de l'ordre de 150mm, pour des dimensions générales du dispositif de protection de l'ordre de 180mm. D'une façon générale, la longueur L est telle qu'elle offre une stabilité optimale du dispositif de protection 10 autour du volet EGR 11 en position fermée, lors de manipulations de la ligne d'échappement associée (figures 10 et 13).

Quel que soit le mode de réalisation du dispositif de protection 10 selon l'invention, son installation autour du volet EGR 11 va maintenant être décrite plus en détails au regard des figures 1 à 3 et 8 à 10. L'opérateur prend d'abord le dispositif de protection 10 comme représenté sur les figures 2 et 8. Puis, il installe le dispositif de protection 10 en emboitant l'embouti 20 dans la partie en saillie 21 du volet EGR 11 et en rapprochant les deux coques 15, 16 l'une de l'autre autour de l'axe d'articulation A, de sorte à placer les différents moyens de positionnement 22, 23 ou 32, 33 au niveau des tuyaux 12 et 13. Les parois 15a, 15b de la coque 15 sont alors placées dans les rainures 24 de la coque 16, pour la variante de réalisation représentée sur les figures 2 à 7b, ou en contact contre les parois 16a, 16b de la coque 16, pour la variante de réalisation représentée sur les figures 8 à 13. Il suffit alors de clipser les moyens de fermeture 18, 19 des deux coques 15, 16, comme représenté notamment sur les figures 3 et 10, de sorte à obtenir la cage de protection, c'est-à-dire le dispositif de protection 10 selon l'invention dans sa position fermée autour du volet EGR 11.

Ainsi, quel que soit le mode de réalisation du dispositif de protection 10 selon l'invention, celui-ci présente donc l'avantage principal de pouvoir être mis en place très facilement et très rapidement et de pouvoir protéger le volet EGR 11 de façon sûre, lors de manipulations de la ligne d'échappement en usine de fabrication et montage. Par ailleurs, un tel dispositif de protection 10 permet une protection contre les chocs et contre les différentes projections d'eau, soudure, etc., à savoir tout ce qui pourrait nuire au fonctionnement du volet EGR.

De même, de tels moyens de positionnement, de centrage et de serrage du dispositif de protection 10 selon l'invention permettent un positionnement simple et rapide autour du volet EGR, procurant notamment des gains en termes de temps de montage. Par ailleurs, l'installation d'un tel dispositif de protection autour du volet EGR peut s'intégrer très facilement dans un process de fabrication et de montage, le dispositif de protection 10 présentant des formes et dimensions telles qu'elles ne gênent pas les différentes manipulations nécessaires autour du volet EGR 11.

L'invention n'est pas limitée aux différents modes de réalisation du dispositif de protection décrits ci-dessus. Notamment, la forme et les dimensions des coques 15, 16 constituant le dispositif de protection 10 sont non limitatives et dépendent notamment des dimensions du volet EGR 11 et des tuyaux d'entrée 12 et de sortie 13 soudés sur le volet EGR 11.

De même, le dispositif de protection 10 peut comporter plus ou moins de découpes dans ses coques 15, 16, selon la position des parties utiles du volet EGR 11. L'articulation 17 des deux coques 15, 16 peut être différente, tant qu'elle permet une installation simple et rapide du dispositif de protection 10 autour du volet EGR 11.

De même, le nombre et la forme des moyens de positionnement, à savoir les ailettes latérales 22, 32, 33, les surépaisseurs 23, les rainures 24 et l'embouti 20, peuvent être différents, tant qu'ils assurent un positionnement, un centrage et un serrage optimaux du dispositif de protection 10 autour du volet EGR 11.

Dans une variante de réalisation non représentée, les deux coques 15, 16 du dispositif de protection 10 peuvent être venues de matières d'une seule pièce, un rétrécissement de matières à leurs extrémités formant la charnière d'articulation 17 apte à entraîner la fermeture du dispositif de protection 10.

Dans une autre variante de réalisation non représentée, un capuchon de protection, tel que celui représenté sur les figures 3 et 6, peut être envisagé pour protéger une connectique faisant saillie d'une des coques 15, 16 du dispositif de protection 10, comme représenté dans la variante des figures 8 à 13.

Un tel dispositif de protection 10 s'applique donc à tous les types de volets EGR 11, destinés à être intégrés dans une ligne d'échappement apte à être montée dans un véhicule automobile.

## Revendications

1. Dispositif de protection (10) d'un élément, apte à passer d'une première position ouverte à une seconde position fermée, dans laquelle le dispositif de protection (10) se positionne sensiblement autour l'élément à protéger, **dispositif de protection caractérisé en ce que**, ledit élément à protéger étant un volet EGR (11) muni de tuyaux d'entrée (12) et de sortie (13) et destiné à être monté sur une ligne d'échappement d'un véhicule automobile, le dispositif de protection (10) est conformé de sorte à former une cage de protection, positionnée autour du volet EGR (11) et destinée à protéger le volet EGR (11), lors de manipulations de la ligne d'échappement.

2. Dispositif de protection selon la revendication précédente, **caractérisé en ce qu**'il comporte au moins :
- deux coques (15, 16) de protection, articulées (17) l'une par rapport à l'autre à leurs premières extrémités et équipées de moyens de fermeture (18, 19) à leurs secondes extrémités,
- des premiers moyens de positionnement (20) du dispositif de protection (10) sur une portion en saillie (21) du volet EGR (11),
- et des seconds moyens de positionnement (22, 23; 32, 33) du dispositif de protection (10) au niveau des tuyaux d'entrée (12) et de sortie (13) du volet EGR (11).

3. Dispositif de protection selon la revendication 2, **caractérisé en ce que** lesdites coques (15, 16) sont conformées à leurs premières extrémités de sorte à former une charnière d'articulation (17; 17a, 17b).

4. Dispositif de protection selon la revendication 2, **caractérisé en ce que** lesdites coques (15, 16) sont venues de matière d'une seule pièce et un rétrécissement de matières liant les deux coques (15, 16) à leurs premières extrémités forme une charnière d'articulation (17; 17a, 17b).

5. Dispositif de protection selon l'une quelconque des revendications 2 à 4, **caractérisé en ce que** lesdits premiers moyens de positionnement comportent un embouti (20), formé dans au moins une des coques (16) et destiné à coopérer avec ladite portion en saillie (21) du volet EGR (11).

6. Dispositif de protection selon l'une quelconque des revendications 2 à 5, **caractérisé en ce que** lesdits seconds moyens de positionnement comportent :
- des ailettes latérales (22), agencées sur les parois (15a, 15b) d'une des coques (15) et aptes à venir parallèlement en contact serré sur les tuyaux d'entrée (12) et de sortie (13) du volet EGR (11), en position fermée du dispositif de protection (10),
- des surépaisseurs (23), agencées au niveau des bords (16a, 16b) de l'autre des coques (16) et aptes à venir en contact sur les tuyaux d'entrée (12) et de sortie (13) du volet EGR (11) en regard des ailettes latérales (22) de l'autre coque (15), en position fermée du dispositif de protection (10).

7. Dispositif de protection selon l'une quelconque des revendications 2 à 6, **caractérisé en ce qu**'une des coques (16) comporte des rainures de positionnement (24), aptes à recevoir une partie des parois latérales (15a, 15b) de l'autre coque (15), de sorte à laisser un jeu prédéterminé entre la majeure partie du volet EGR (11) et le dispositif de protection (10).

8. Dispositif de protection selon l'une quelconque des revendications 2 à 5, **caractérisé en ce que** lesdits seconds moyens de positionnement comportent des ailettes latérales (32, 33), agencées sur les parois (15a, 15b, 16a, 16b) des deux coques (15, 16) et aptes à venir parallèlement en contact serré autour des tuyaux d'entrée (12) et de sortie (13) du volet EGR (11) en regard les unes des autres, en position fermée du dispositif de protection (10).

9. Dispositif de protection selon la revendication précédente, **caractérisé en ce qu**'une des coques (15) du dispositif de protection (10) comporte une paroi de base (15c) sensiblement plane, conformée de sorte à délimiter au moins deux rainures (35) d'évacuation de liquide, éventuellement présent à l'intérieur du dispositif de protection (10) dans sa position fermée.

10. Dispositif de protection selon la revendication précédente, **caractérisé en ce que,** en position fermée du dispositif de protection (10), les parois (15a, 15b, 16a, 16b) des coques (15, 16) sont aptes à venir en contact les unes contre les autres, au-dessus des dites rainures (35) d'évacuation de liquide, de sorte à laisser un jeu prédéterminé entre la majeure partie du volet EGR (11) et le dispositif de protection (10).

11. Dispositif de protection selon l'une des revendications 9 et 10, **caractérisé en ce que** ladite paroi de base (15c) présente une longueur prédéterminée (L) de sorte à permettre un positionnement stable du dispositif de protection (10) sur des moyens de manutention (31), lors de manipulations de la ligne d'échappement.

12. Dispositif de protection selon l'une quelconques des revendications 8 à 11, **caractérisé en ce qu**'au moins une des coques (15) comporte des conformations locales (34), aptes à permettre l'empilement de plusieurs dispositifs de protection (10) les uns sur les autres.

13. Dispositif de protection selon l'une quelconque des revendications 2 à 12, **caractérisé en ce qu**'au moins une des coques (15, 16) du dispositif de protection (10) comporte au moins une découpe (28, 29), réalisée dans toute l'épaisseur de ladite coque (15, 16).

14. Dispositif de protection selon l'une quelconque des revendications précédentes, **caractérisé en ce qu**'il comporte un capuchon de protection (25), apte à coopérer avec une connectique (26) du volet EGR (11), faisant saillie à travers le dispositif de protection (10) en position fermée autour du volet EGR (11).

15. Dispositif de protection selon la revendication précédente, **caractérisé en ce que** ledit capuchon (25) est lié au dispositif de protection (10) par des moyens d'attache, du type sangle anti-perte (27).
